# EUROPEAN PATENT APPLICATION

(11) **EP 3 636 503 A1**
(43) Date of publication of application: **15.04.2020**
(21) Application number: 17935714.0
(22) Date of filing: 28.12.2017
(51) Int. Cl.: B60T 13/24, B60T 11/10

(54) **TRAIN BACKUP BRAKE CONTROL SYSTEM AND METHOD**

(30) Priority: 20.12.2017 CN 201711384566
(71) Applicant: CRRC Changchun Railway Vehicles Co., Ltd., Changchun, Jilin 130000 (CN)
(72) Inventor: LIU, Changqing, Jilin 130000 (CN); QIAO, Feng, Jilin 130000 (CN)
(74) Representative: Thoma, Michael
(86) International application number: PCT/CN2017/119207
(87) International publication number: WO 2019/119497

(57) **Abstract**

A train backup brake control system comprises a train main reservoir pipe, a train brake pipe, an air brake control handle (10) and a relay valve (20). A conventional electrically-controlled straight brake system can be switched to the train backup brake control system at any time. Moreover, the train backup brake control system fully exploits functional characteristics of the relay valve (20) to supply a higher brake pressure to the train brake pipe, such that the entire train under control of the backup brake control system can realize brake control performance achieved by the electrically-controlled straight brake system, thereby ensuring a higher degree of safety and reliability for passengers. Also disclosed is a train backup brake control method applied in the train backup brake control system and capable of achieving the above advantageous effect.

## Description

The present application claims priority to Chinese Patent Application No. 201711384566.9, titled "TRAIN BACKUP BRAKE CONTROL SYSTEM AND METHOD", filed on December 20, 2017 with the State Intellectual Property Office of People's Republic of China, which is incorporated herein by reference in its entirety.

### FIELD

The present disclosure relates to the technical field of train brake controlling, and in particular to a train backup brake controlling system and a train backup brake controlling method.

### BACKGROUND

At present, brake systems on high-speed railroad trains mainly have two types, that is, straight-through electric-controlled brake systems and automatic air brake systems. In European countries, automatic air brake systems are mainly used. In Japan, straight-through electric-controlled brake systems are mainly used. In China, straight-through electric-controlled brake systems are mainly used, while some multiple unit trains are still provided with backup automatic air brake systems for operation conditions such as no-electric rescue, loop backing and emergency braking.

Existing backup air brake systems can be activated by operations of certain devices only when the train is stopped, that is, the train is in a standstill state. For example, in a case where a backup brake is required or a backup brake test is to be performed, the driver is allowed to perform related operations only after stopping the train, thereby resulting in complex operations and many preconditions which reduce availability of backup brake. Moreover, since a backup air brake system is used only for emergency, a conventional gas brake controlling handle in the backup air brake system can only provide a brake pressure with a small flow rate to a train brake pipe, thereby greatly reducing a braking performance of a train and obtaining a poor brake effect.

Therefore, an issue to be solved urgently by those skilled in the art is how to overcome various technical defects in the existing backup air brake system to provide a train backup control scheme in which a train backup brake controlling system can be activated without stopping the train and can provide a brake pressure with a larger flow rate to realize a switch between the straight-through electric-controlled brake system and the backup air brake system without causing any difference of brake performance.

### SUMMARY

An object of the present disclosure is to provide a train backup brake controlling system which can be activated without stopping the train and can be switched with a conventional straight-through electric-controlled brake system at any time and takes full advantage of functional characteristics of the relay valve to provide a brake pressure with a larger flow rate to the train brake pipe, so that an entire marshaled train can achieve brake controlling performance under control of the straight-through electric-controlled brake system when a backup brake controlling system is used, thereby providing greater safety and reliability for passengers.

Another object of the present disclosure is to provide a train backup brake controlling method applied to the above-described train backup brake controlling system.

In order to achieve the above objects, a train backup brake controlling system is provided according to the present disclosure, which includes:
a train main air reservoir pipe configured to provide compressed air required by train gas brake;
a train brake pipe configured to control brake and release of a train;
a gas brake controlling handle including a first air source input end, an emergency brake end, a switch controlling pressure output end, a brake controlling pressure output end and a first pressure release end; and
a relay valve including a second air source input end, a brake pipe pressure output end, a switch controlling pressure input end, a brake controlling pressure input end and a second pressure release end, where
the first air source input end is in communication with both the train main air reservoir pipe and the second air source input end; the emergency brake end is in communication with both the brake pipe pressure output end and the train brake pipe; the switch controlling pressure output end is communicated with the switch controlling pressure input end through a control pipeline provided with a control device; the brake controlling pressure output end is in communication with the brake controlling pressure input end; and the first pressure release end and the second pressure release end are both in communication with the atmosphere;
the gas brake controlling handle is configured to provide, based on a brake gear position where the gas brake controlling handle is located, a brake controlling pressure corresponding to the brake gear position; and
the relay valve is configured to adjust, in a case where the switch controlling pressure output end is communicated with the switch controlling pressure input end by the control device, a brake pipe pressure outputted from the brake pipe pressure output end to be consistent with a brake controlling pressure inputted via the brake controlling pressure input end, where a flow rate of the brake pipe pressure output end is greater than a flow rate of the brake controlling pressure input end.

Optionally, a gas pipeline, through which the brake controlling pressure output end and the brake controlling pressure input end are communicated, is provided with a first bypass, and the first bypass is provided with a first volume air reservoir and a gas pressure gauge sequentially in a gas flow direction.

Optionally, the gas pipeline, through which the brake controlling pressure output end and the brake controlling pressure input end are communicated, is provided with a second bypass, and the second bypass is provided with a pressure detection device configured to detect whether there is a brake controlling pressure.

Optionally, the relay valve further includes an auxiliary pressure adjustment end, a gas pipeline with which the auxiliary pressure adjustment end is in communication is provided with a second volume air reservoir and a third volume air reservoir sequentially .

Optionally, the control device includes a manual control valve and an electric control valve provided in parallel with the manual control valve.

Optionally, the manual control valve includes an output end B1 and an input end B3, the electric control valve includes a first input end A1, a second input end A2 and an output end A3. The second input end A2 and the input end B3 are in communication with the switch controlling pressure output end, the output end B1 is in communication with the first input end A1, and the output end A3 is in communication with the switch controlling pressure input end. When the electric control valve is powered on, the first input end A2 is in communication with the second output end A3, and the first input end A1 is not in communication with the second output end A3. When the electric control valve is powered off, the first input end A2 is not in communication with the second output end A3, and the first input end A1 is in communication with the second output end A3.

In order to achieve the above objects, a train backup brake controlling method applied to the train backup brake controlling system as described above is further provided according to the present disclosure, the method includes:
determining, based on an actual traveling condition of the train, a brake level of the gas brake controlling handle, placing the gas brake controlling handle in a brake gear position corresponding to the brake level to obtain a brake controlling pressure corresponding to the brake gear position, and outputting the brake controlling pressure to the relay valve;
adjusting, by the relay valve, an outputted brake pipe pressure based on the brake controlling pressure to obtain an adjusted brake pipe pressure consistent with the brake controlling pressure; and
transmitting the adjusted brake pipe pressure to the emergency brake end of the gas brake controlling handle and the train brake pipe, to reduce, when emergency braking is required, the brake pipe pressure through the emergency brake end with a maximum speed and realize train brake controlling.

Optionally, the adjusting, by the relay valve, an outputted brake pipe pressure based on the brake controlling pressure to obtain an adjusted brake pipe pressure consistent with the brake controlling pressure including:
communicating, if a currently outputted brake pipe pressure is less than a currently inputted brake controlling pressure, the second air source input end with the brake pipe pressure output end to increase an actually outputted brake pipe pressure until the actually outputted brake pipe pressure is consistent with an actually inputted brake controlling pressure; and
communicating, if a currently outputted brake pipe pressure is greater than a currently inputted brake controlling pressure, the brake pipe pressure output end with the second pressure release end to decrease an actually outputted brake pipe pressure until the actually outputted brake pipe pressure is consistent with an actually inputted brake controlling pressure.

Optionally, the method further includes:
determining, in a case where an electric-controlled brake system generally used by the train operates normally, whether a brake controlling pressure is detected by a pressure detection device provided in a second bypass; and
transmitting, if the brake controlling pressure is detected, a blockading command for a traction motor to a traction system of the train.

Optionally, the method further includes:
determining whether an electric control valve is in a normal operation state; and
feeding back, if the electric control valve is not in the normal operation state, an electric control valve failure warning via a preset route, where a train manager activates the train backup brake controlling system by a manual control valve after the train manager receives the electric control valve failure warning.

Apparently, the train backup brake controlling system provided according to the present disclosure can be activated without stopping the train and can be switched with a conventional straight-through electric-controlled brake system at any time and takes full advantage of functional characteristics of the relay valve to provide a brake pressure with a larger flow rate to the train brake pipe, so that an entire marshaled train can achieve brake controlling performance under control of the straight-through electric-controlled brake system when a backup brake controlling system is used, thereby providing greater safety and reliability for passengers. A train backup brake controlling method applied to the above-described train backup brake controlling system is further provided according to the present disclosure, which achieves the above beneficial effects and is not described in detail here.

### BRIEF DESCRIPTION OF THE DRAWINGS

In order to more clearly describe the technical solution in the embodiments of the present disclosure or the technical solution in the conventional technology, drawings to be used in the description of the embodiments of the present disclosure or of the conventional technology are briefly described hereinafter. It is apparent that the drawings described below show merely the embodiments of the present disclosure, and those skilled in the art may obtain other drawings according to the provided drawings without any creative effort.
Figure 1 is a structural schematic diagram of a train backup brake controlling system according to an embodiment of the present disclosure; and
Figure 2 is a flowchart of a train backup brake controlling method according to an embodiment of the present disclosure.

### DETAILED DESCRIPTION OF EMBODIMENTS

The kernel of the present disclosure is to provide a train backup brake controlling system and a train backup brake controlling method. The train backup brake controlling system can be activated without stopping the train and can be switched with a conventional straight-through electric-controlled brake system at any times and takes full advantage of functional characteristics of the relay valve to provide a brake pressure with a larger flow rate to the train brake pipe, so that an entire marshaled train can achieve brake controlling performance under control of the straight-through electric-controlled brake system when a backup brake controlling system is used, thereby providing greater safety and reliability for passengers.

In order to make the objects, technical solutions and advantages of the embodiments of the present disclosure clearer, the technical solutions in the embodiments of the present disclosure are described clearly and completely in conjunction with the accompanying drawings in the embodiments of the present disclosure hereinafter. It is apparent that the below-described embodiments are merely some rather than all of embodiments of the present disclosure. All other embodiments obtained by those skilled in the art based on the embodiments in the present disclosure without any creative work should fall within the protection scope of the present disclosure.

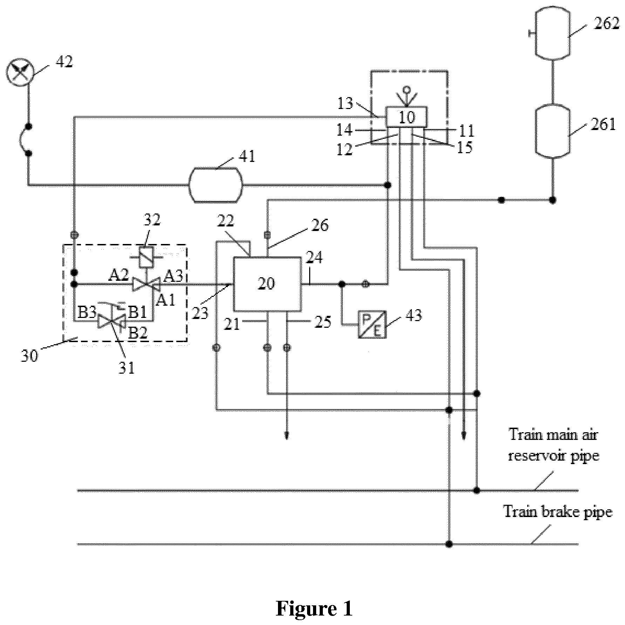

Reference is made to Figure 1, which is a structural schematic diagram of a train backup brake controlling system according to an embodiment of the present disclosure. The train backup brake controlling system includes a train main air reservoir pipe, a train brake pipe, a gas brake controlling handle 10 and a relay valve 20.

The train main air reservoir pipe is configured to provide compressed air required by train gas brake.

The train brake pipe is configured to control brake and release of a train.

It is indispensable to provide the train main air reservoir pipe providing compressed air required by train gas brake and the train brake pipe controlling brake and release of a train according to the actual needs in the train containing the air brake system, both of which are well-known to those skilled in the art and are not be described here.

The gas brake controlling handle 10 includes a first air source input end 11, an emergency brake end 12, a switch controlling pressure output end 13, a brake controlling pressure output end 14 and a first pressure release end 15.

The relay valve 20 includes a second air source input end 21, a brake pipe pressure output end 22, a switch controlling pressure input end 23, a brake controlling pressure input end 24 and a second pressure release end 25.

The first air source input end 11 is in communication with both the train main air reservoir pipe and the second air source input end 21. The emergency brake end 12 is in communication with both the brake pipe pressure output end 22 and the train brake pipe. The switch controlling pressure output end 13 is communicated with the switch controlling pressure input end 23 through a control pipeline provided with a control device 30. The brake controlling pressure output end 14 is in communication with the brake controlling pressure input end 24. The first pressure release end 15 and the second pressure release end 25 are both in communication with the atmosphere.

As shown in Figure 1, the communication among the gas brake controlling handle 10, the relay valve 20, the train main air reservoir pipe and the train brake pipe is as the communication above-described. The gas brake controlling handle 10 is configured to provide, based on a brake gear position where the gas brake controlling handle 10 is located, a brake controlling pressure corresponding to the brake gear position. The relay valve 20 is configured to adjust, in a case where the switch controlling pressure output end 13 is communicated with the switch controlling pressure input end 23 by the control device 30, a brake pipe pressure outputted from the brake pipe pressure output end 22 to be consistent with a brake controlling pressure inputted via the brake controlling pressure input end 24. A flow rate of the brake pipe pressure output end 22 is greater than a flow rate of the brake controlling pressure input end 24.

It should be noted that the gas brake controlling handle 10 inputs a brake controlling pressure to the brake controlling pressure input end 24 of the relay valve 20 via the brake controlling pressure output end 14 by using an air source pressure inputted via the first air source input end 11 in combination with a brake gear position where the gas brake controlling handle 10 is located. During this process, since the brake controlling pressure and the air source pressure are usually not equal to each other, in a case where the brake controlling pressure is required to be increased as the brake level increases, the brake controlling pressure output end 14 and the first air source input end 11 are communicated to increase the actually outputted brake controlling pressure, and the brake controlling pressure output end 14 and the first air source input end 11 are cut off when a brake controlling pressure matching with the brake level is obtained. On the contrary, in a case where the brake controlling pressure is required to be decreased as the brake level decreases, the brake controlling pressure output end 14 and the first pressure release end 15 are communicated to decrease the actually outputted brake controlling pressure, and the brake controlling pressure output end 14 and the first pressure release end 15 are cut off when the brake controlling pressure matching with the brake level is obtained.

The control device 30 is configured to control, by turn-on or turn-off of the control device 30, whether to allow the switch controlling pressure outputted from the switch controlling pressure output end 13 to reach the relay valve 20 via the switch controlling pressure input end 23 to perform activation. Specifically, the control device 30 may realize a switch controlling function through the switch controlling pressure in many ways. For example, a gas pressure piston valve may be arranged at a position where the relay valve 20 is connected with the switch controlling pressure input end, the function implementation structures may be activated on receiving a predetermined pressure. Furthermore, the switch controlling function may also be implemented in other same or similar ways, which is not limited herein and may be flexibly selected according to actual situations.

A control function of the control device 30 may be implemented as follows. The control device 30 includes a manual control valve 31 and an electric control valve 32 provided in parallel with the manual control valve 31. The manual control valve 31 includes an output end B1 and an input end B3. The electric control valve 32 includes a first input end A1, a second input end A2 and an output end A3. The second input end A2 and the input end B3 are in communication with the switch controlling pressure output end 13. The output end B1 is in communication with the first input end A1. The output end A3 is in communication with the switch controlling pressure input end 23.

Generally, the train is powered on normally. In a case where the conventional straight-through electric-controlled brake system is in a normal operation state, that is, when the electric control valve 32 is powered on, the first input end A2 is in communication with the second output end A3, and the first input end A1 is not in communication with the second output end A3. In this case, no matter what kind of communication state the manual control valve 31 provided in parallel below is, the train backup brake controlling system according to the present disclosure is in an activation state with the electric control valve 32 under a condition of shielding the function of the manual control valve 31. That is, the train has two brake controlling systems either of which can control brake and release of the train.

When the electric control valve (32) is powered off, the first input end A2 is not in communication with the second output end A3, and the first input end A1 is in communication with the second output end A3. In this case, it is only required to communicate the output end B1 and the input end B3, the train backup brake controlling system may be activated only through adjusting the communication relationship of the manual control valve 31 manually by a train manager. The switch controlling pressure is blocked to flow to the switch controlling pressure input end 23 in a case where the input end B3 and the end B2 of the manual control valve 31 are communicated with each other.

An determination process includes: determining whether an electric control valve 32 is in a normal operation state; and feeding back, if the electric control valve is not in the normal operation state, an electric control valve failure warning via a preset route, where a train manager activates the train backup brake controlling system by a manual control valve 31 after the train manager receives the electric control valve failure warning.

Specifically, the manual control valve 31 may be a ball valve, the electric control valve 32 may be a solenoid valve. However, other components capable of achieving the above functions may also be used, which is not limited herein.

Furthermore, in order to better monitor the train backup brake controlling system, a gas pipeline, through which the brake controlling pressure output end 14 and the brake controlling pressure input end 14 are communicated, may be provided with a first bypass and a second bypass. The first bypass is provided with a first volume air reservoir 41 and a gas pressure gauge 42 sequentially in a gas flow direction. The second bypass is provided with a pressure detection device 43 configured to detect whether there is a brake controlling pressure. The devices arranged on the first bypass are used to enable a driver in a drive cab to see a target brake controlling pressure under the target brake gear position in real time. The first volume air reservoir 41 is used for buffering.

The emergency brake end 12 provided in the gas brake controlling handle 10 is used in a case where the train is required to be braked emergently. In this case, the first air source input end 11 and the emergency brake end 12 are communicated, the train brake air reservoir pressure is increased rapidly as the brake pipe pressure decreases with a maximum speed, to achieve emergency brake of the train. Since the first air source input end 11 and the emergency braking end 12 are communicated, the brake controlling pressure outputted from the brake controlling pressure output end 14 is changed to zero therefor, the brake pipe pressure outputted from the brake pipe pressure output end 22 tends to be zero after a certain period of time with adjustment of the relay valve 20. Therefore, the first air source input end 11 and the emergency brake end 12 are communicated in the gas brake controlling handle 10. Furthermore, in a case of non-emergency brake, the emergency brake end 12 can realize a calibration between the brake pipe pressure and the brake controlling pressure. That is, the first air source input end 11 and the emergency brake end 12 are cut off, a brake pipe pressure adjusted by the relay valve 20 is fed back from the emergency brake end 12, and the brake pipe pressure is compared with the brake controlling pressure outputted from the brake controlling pressure output end 14, the brake pipe pressure is consistent with the brake controlling pressure in a normal situation. If the brake pipe pressure is inconsistent with the brake controlling pressure, it is determined that there is a fault and the brake pipe pressure is adjusted accordingly based on a corresponding relationship.

Since the gas brake controlling handle 10 cannot directly provide a brake pipe pressure with a larger flow rate that can brake or relieve an entire marshaled train to the train brake pipe, the relay valve 20 is used in the present disclosure to output a brake pipe pressure with a larger flow rate with a brake controlling pressure due to a small flow rate. It should be noted that the brake controlling pressure is consistent with the brake pipe pressure, and a diameter of a gas pipeline delivering the brake pipe pressure is apparently greater than a diameter of a gas pipeline delivering the brake controlling pressure.

Furthermore, the relay valve 20 may be further provided with an auxiliary pressure adjustment end 26, a gas pipeline with which the auxiliary pressure adjustment end 26 is in communication is provided with a second volume air reservoir 261 and a third volume air reservoir 262 sequentially. The two volume air reservoirs provided here usually have different volumes and function mainly to expand an amount of gas that can be contained in the relay valve 20 and to achieve bidirectional flow of a gas to provide an auxiliary adjustment pressure to the relay valve 20 or accept the auxiliary adjustment pressure form the relay valve 20.

Based on the above technical solution, the train backup brake controlling system provided according to the present disclosure can be activated without stopping the train and can be switched with a conventional straight-through electric-controlled brake system at any time and takes full advantage of functional characteristics of the relay valve to provide a brake pressure with a larger flow rate to the train brake pipe, so that an entire marshaled train can achieve brake controlling performance under control of the straight-through electric-controlled brake system when a backup brake controlling system is used, thereby providing greater safety and reliability for passengers.

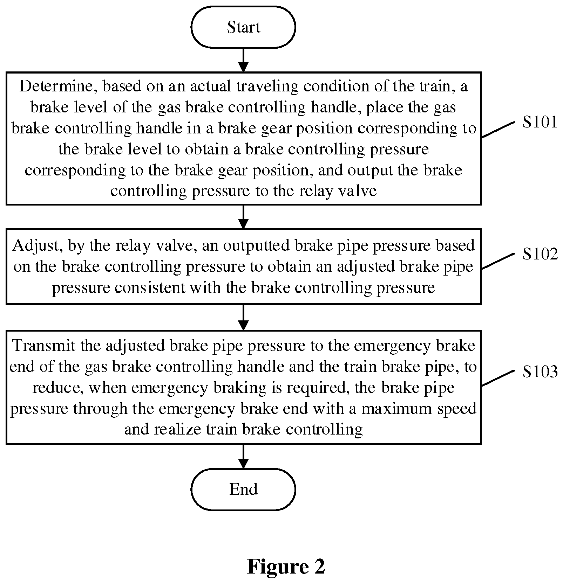

Reference is made to Figure 2, which is a flowchart of a train backup brake controlling method according to an embodiment of the present disclosure.

The present embodiment is intended to illustrate how to realize specific functions of the train backup brake controlling system according to the above-described embodiment of the present disclosure. Since the same terms is also used based on the train backup brake control system shown in Figure 1, for the same part, reference may be made to the relevant part of the above embodiment, and details are not described herein. The method includes the following steps S101 to S103.

In step S101, a brake level of the gas brake controlling handle is determined based on an actual traveling condition of the train, the gas brake controlling handle is placed in a brake gear position corresponding to the brake level to obtain a brake controlling pressure corresponding to the brake gear position, and the brake controlling pressure is outputted to the relay valve.

In step S102, the relay valve adjusts an outputted brake pipe pressure based on the brake controlling pressure to obtain an adjusted brake pipe pressure consistent with the brake controlling pressure.

Step S102 includes: communicating, if a currently outputted brake pipe pressure is less than a currently inputted brake controlling pressure, the second air source input end 21 with the brake pipe pressure output end 22 to increase an actually outputted brake pipe pressure until the actually outputted brake pipe pressure is consistent with an actually inputted brake controlling pressure; and communicating, if a currently outputted brake pipe pressure is greater than a currently inputted brake controlling pressure, the brake pipe pressure output end 22 with the second pressure release end 25 to decrease an actually outputted brake pipe pressure until the actually outputted brake pipe pressure is consistent with an actually inputted brake controlling pressure.

In step S103, the adjusted brake pipe pressure is transmitted to the emergency brake end of the gas brake controlling handle and the train brake pipe, to reduce, when emergency braking is required, the brake pipe pressure through the emergency brake end with a maximum speed and realize train brake controlling.

Further, in a case where an electric-controlled brake system generally used by a train operates normally, it may be detected whether there is a brake controlling pressure in the train backup brake controlling system provided in the present disclosure to determine whether to blockade a traction motor. Specifically, it is determined whether a brake controlling pressure is detected by a pressure detection device provided in a second bypass. If the brake controlling pressure is detected, a blockading command for the traction motor is transmitted to a traction system of the train.

The situations are complicated and cannot be illustrated in detail, however, those skilled in the art should be aware that many examples may be made based on the principle of the method provided in the present disclosure in connection with actual situations without paying any creative work, and these examples should fall within the protection scope of the present disclosure.

The embodiments of the present disclosure are described in a progressive manner, and each embodiment places emphasis on the difference from other embodiments. Therefore, for the same or similar parts between the embodiments, one may refer to the description of other embodiments. For the device according to the embodiments, the device corresponds to the method according to the embodiments. Therefore, the description thereof is simple, and for the related parts, one may refer to the description of the method embodiments.

Those skilled in the art may further realize that the units and algorithm steps of the examples described in the embodiments disclosed herein can be implemented by electronic hardware, computer software, or a combination of the two. To clearly describe interchangeability between hardware and software, the modules and steps of each example have been generally described in terms of their functionality in the above description. Whether these functions are implemented by hardware or software depends on the specific application and design constraints of the technical solutions. A person skilled in the art may use different methods to implement the described functions for each particular application, but such implementation should not be considered as beyond the scope of the present disclosure.

The principle and embodiments of the present disclosure are described with several specific examples herein. The description of the above-described embodiments is merely used to facilitate understanding the method and core idea of the present disclosure. It should be noted that those skilled in the art can make various improvements and modifications to the present disclosure without departing from the principle of the present disclosure, and such improvements and modifications should fall within the protection scope of the claims of the present disclosure.

It should be noted that a relation term such as "first" and "second" herein is only used to distinguish one entity or operation from another entity or operation, and does not necessarily require or imply that there is an actual relation or sequence among these entities or operations. Additionally, terms such as "include", "comprise" or any other variant are intended to cover a non-exclusive inclusion, so that a process, a method, an object or a device including a series of factors not only includes the series of factors, but also includes other factors not explicitly listed, or also includes inherent factors in the process, the method, the object or the device. Without more limitation, a factor defined in a sentence "include a ..." does not exclude another same factor existing in the process, the method, the object, or the device including the described factor.

## Claims

1. A train backup brake controlling system, comprising:
a train main air reservoir pipe configured to provide compressed air required by train gas brake;
a train brake pipe configured to control brake and release of a train;
a gas brake controlling handle (10) comprising a first air source input end (11), an emergency brake end (12), a switch controlling pressure output end (13), a brake controlling pressure output end (14) and a first pressure release end (15); and
a relay valve (20) comprising a second air source input end (21), a brake pipe pressure output end (22), a switch controlling pressure input end (23), a brake controlling pressure input end (24) and a second pressure release end (25), wherein
the first air source input end (11) is in communication with both the train main air reservoir pipe and the second air source input end (21); the emergency brake end (12) is in communication with both the brake pipe pressure output end (22) and the train brake pipe; the switch controlling pressure output end (13) is communicated with the switch controlling pressure input end (23) through a control pipeline provided with a control device (30); the brake controlling pressure output end (14) is in communication with the brake controlling pressure input end (24); and the first pressure release end (15) and the second pressure release end (25) are both in communication with the atmosphere;
the gas brake controlling handle (10) is configured to provide, based on a brake gear position where the gas brake controlling handle (10) is located, a brake controlling pressure corresponding to the brake gear position; and
the relay valve (20) is configured to adjust, in a case where the switch controlling pressure output end (13) is communicated with the switch controlling pressure input end (23) by the control device (30), a brake pipe pressure outputted from the brake pipe pressure output end (22) to be consistent with a brake controlling pressure inputted via the brake controlling pressure input end (24), wherein a flow rate of the brake pipe pressure output end (22) is greater than a flow rate of the brake controlling pressure input end (24).

2. The train backup brake controlling system according to claim 1, wherein a gas pipeline, through which the brake controlling pressure output end (14) and the brake controlling pressure input end (14) are communicated, is provided with a first bypass, and the first bypass is provided with a first volume air reservoir (41) and a gas pressure gauge (42) sequentially in a gas flow direction.

3. The train backup brake controlling system according to claim 2, wherein the gas pipeline, through which the brake controlling pressure output end (14) and the brake controlling pressure input end (24) are communicated, is provided with a second bypass, and the second bypass is provided with a pressure detection device (43) configured to detect whether there is a brake controlling pressure.

4. The train backup brake controlling system according to claim 3, wherein the relay valve is further provided with an auxiliary pressure adjustment end (26), a gas pipeline with which the auxiliary pressure adjustment end (26) is in communication is provided with a second volume air reservoir (261) and a third volume air reservoir (262) sequentially .

5. The train backup brake controlling system according to claim 4, wherein the control device (30) comprises a manual control valve (31) and an electric control valve (32) provided in parallel with the manual control valve (31).

6. The train backup brake controlling system according to claim 5, wherein the manual control valve (31) comprises an output end B1 and an input end B3, the electric control valve (32) comprises a first input end A1, a second input end A2 and an output end A3; the second input end A2 and the input end B3 are in communication with the switch controlling pressure output end (13); the output end B1 is in communication with the first input end A1; and the output end A3 is in communication with the switch controlling pressure input end (23);
when the electric control valve (32) is powered on, the first input end A2 is in communication with the second output end A3, and the first input end A1 is not in communication with the second output end A3; and when the electric control valve (32) is powered off, the first input end A2 is not in communication with the second output end A3, and the first input end A1 is in communication with the second output end A3.

7. A train backup brake controlling method applied to the train backup brake controlling system according to any one of claims 1 to 6, the method comprising:
determining, based on an actual traveling condition of the train, a brake level of the gas brake controlling handle, placing the gas brake controlling handle in a brake gear position corresponding to the brake level to obtain a brake controlling pressure corresponding to the brake gear position, and outputting the brake controlling pressure to the relay valve;
adjusting, by the relay valve, an outputted brake pipe pressure based on the brake controlling pressure to obtain an adjusted brake pipe pressure consistent with the brake controlling pressure; and
transmitting the adjusted brake pipe pressure to the emergency brake end of the gas brake controlling handle and the train brake pipe, to reduce, when emergency braking is required, the brake pipe pressure through the emergency brake end with a maximum speed and realize train brake controlling.

8. The train backup brake controlling method according to claim 7, wherein the adjusting, by the relay valve, an outputted brake pipe pressure based on the brake controlling pressure to obtain an adjusted brake pipe pressure consistent with the brake controlling pressure comprising:
communicating, if a currently outputted brake pipe pressure is less than a currently inputted brake controlling pressure, the second air source input end with the brake pipe pressure output end to increase an actually outputted brake pipe pressure until the actually outputted brake pipe pressure is consistent with an actually inputted brake controlling pressure; and
communicating, if a currently outputted brake pipe pressure is greater than a currently inputted brake controlling pressure, the brake pipe pressure output end with the second pressure release end to decrease an actually outputted brake pipe pressure until the actually outputted brake pipe pressure is consistent with an actually inputted brake controlling pressure.

9. The train backup brake controlling method according to claim 7 or 8, further comprising:
determining, in a case where an electric-controlled brake system generally used by the train operates normally, whether a brake controlling pressure is detected by a pressure detection device provided in a second bypass; and
transmitting, if the brake controlling pressure is detected, a blockading command for a traction motor to a traction system of the train.

10. The train backup brake controlling method according to claim 9, further comprising:
determining whether an electric control valve is in a normal operation state; and
feeding back, if the electric control valve is not in the normal operation state, an electric control valve failure warning via a preset route, wherein a train manager activates the train backup brake controlling system by a manual control valve after the train manager receives the electric control valve failure warning.
